# EUROPÄISCHE PATENTSCHRIFT

(11) **EP 2 523 281 B1**
(45) Veröffentlichungstag und Bekanntmachung des Hinweises auf die Patenterteilung: **31.12.2014**
(21) Anmeldenummer: 12166499.9
(22) Anmeldetag: 03.05.2012
(51) Int. Cl.: H02G 3/04, H02G 3/06, H02G 3/12

(54) **Kabelkanal**
Cable channel
Caniveau de câbles

(30) Priorität: 13.05.2011 DE 202011100808 U
(43) Veröffentlichungstag der Anmeldung: 14.11.2012
(73) Patentinhaber: OBO Bettermann GmbH & Co. KG, 58710 Menden (DE)
(72) Erfinder: Raschke, Jörg, 51674 Wiehl (DE)
(74) Vertreter: Patentanwälte Ruff, Wilhelm, Beier, Dauster & Partner

(56) Entgegenhaltungen:
- EP-A1- 0 630 090
- US-A- 6 143 984

## Beschreibung

Die Erfindung betrifft einen Kabelkanal mit einem Grundkörper zur Aufnahme von Kabeln und elektrischen und/oder datentechnischen Installationsgeräten, einem Deckel zum wenigstens abschnittsweisen Verschließen des Kabelkanals, einer Abdeckblende, wobei die Abdeckblende verschiebbar an einem seitlichen Ende des Grundkörpers angeordnet ist, seitlich über das Ende des Grundkörpers hinausragt und relativ zum Grundkörper in und entgegen einer Längsrichtung des Kabelkanals verschiebbar ist, wobei die Abdeckblende mit wenigstens einer Halteplatte versehen ist, die im montierten Zustand der Abdeckblende am Kabelkanal angreift.

Kabelkanäle werden üblicherweise in Stücken zu jeweils zwei Meter hergestellt. Die Kabelkanäle werden dann in der Regel auf der Baustelle an die tatsächlichen Wandabmessungen eines Raumes angepasst. Zur Überbrückung von Stößen zwischen den einzelnen Stücken der Kabelkanäle existieren Zwischenstücke und auch Eckstücke. Immer aber ist das exakte Ablängen von einem oder mehreren Kabelkanalstücken auf die tatsächlich benötigten Abmessungen erforderlich.

Aus der europäischen Offenlegungsschrift EP 0 630 090 A1 ist ein Kabelkanal mit einem Grundkörper zur Aufnahme von Kabeln und elektrischen und/oder datentechnischen Installationsgeräten sowie einem Deckel zum wenigstens abschnittsweisen Verschließen des Kabelkanals bekannt. Zum Verbinden von zwei Abschnitten des Kabelkanals ist eine Abdeckblende bekannt, wobei die Abdeckblende verschiebbar an einem seitlichen Ende des Grundkörpers angeordnet ist, seitlich über das Ende des Grundkörpers hinausragt und relativ zum Grundkörper in und entgegen einer Längsrichtung des Kabelkanals verschiebbar ist. Die Abdeckplatte ist mit einer Halteplatte versehen, die im montierten Zustand der Abdeckblende am Kabelkanal angreift. Die Halteplatte ist relativ zur Abdeckblende fixiert und die Halteplatte liegt im montierten Zustand der Abdeckblende auf einer Innenseite des Deckels des Kabelkanals an, wohingegen die Abdeckplatte auf einer Außenseite des Deckels anliegt.

Aus der US-Patentschrift US 6,143,984 ist ein wannenförmiges Verbindungsstück für zwei Abschnitte eines Kabelkanals bekannt. Das wannenförmige Verbindungsstück wird außen auf die Grundkörper der Kabelkanäle aufgelegt und mit einem Deckel versehen. Das Verbindungsstück weist mehrere Langlöcher auf, die mittels Schrauben an den Kabelkanalabschnitten gesichert werden. Das Verbindungsstück überdeckt eine Stoßstelle zwischen den Kabelkanalstücken damit vollständig.

Mit der Erfindung soll ein verbesserter Kabelkanal bereitgestellt werden, der für seinen vorgesehenen Einsatzzweck vorkonfektioniert ist.

Erfindungsgemäß ist hierzu ein Kabelkanal mit einem Grundkörper zur Aufnahme von Kabeln und elektrischen und/oder datentechnischen Installationsgeräten sowie einem Deckel zum wenigstens abschnittsweisen Verschließen des Kabelkanals vorgesehen, bei dem wenigstens eine Abdeckblende vorgesehen ist, wobei die Abdeckblende verschiebbar an einem seitlichen Ende des Grundkörpers angeordnet ist, seitlich über das Ende des Grundkörpers hinausragt und relativ zum Grundkörper in und entgegen einer Längsrichtung des Kabelkanals verschiebbar ist, wobei die Abdeckblende mit wenigstens einer Halteplatte versehen ist, die relativ zur Abdeckblende verschiebbar angeordnet ist und im montierten Zustand der Abdeckblende am Kabelkanal angreift und wobei die Halteplatte im montierten Zustand der Abdeckblende stumpf an dem seitlichen Ende des Kabelkanals anstößt.

Durch Vorsehen der Abdeckblende kann der Kabelkanal für mehrere Wandabstände innerhalb eines vordefinierten Bereichs vorkonfektioniert werden. Die Anpassung des Kabelkanals auf die tatsächlich benötigte Länge kann dann auf der Baustelle selbst durch einfaches Verschieben der Abdeckblende erfolgen. Verwendung findet der erfindungsgemäße Kabelkanal vorzugsweise in Baucontainern. Die Wandabstände von Baucontainern sind auf der Außenseite zwar in der Regel genormt, die Größe der Innenräume ist jedoch nicht konstant, da beispielsweise je nach Verwendungszweck des Containers unterschiedlich dicke Isolierungen oder Wandverkleidungen vorgesehen sind. Üblicherweise liegen die Wandabstände an der Stirnseite von Containern zwischen 2,18 m bis 2,24 m. Da Kabelkanäle üblicherweise in Stücken von 2 m geliefert werden, war hier bisher ein zeitaufwendiges Anstückeln des Kabelkanals erforderlich. Eine Vorkonfektionierung ist mit mehreren Grundkörpern des Kabelkanals ebenfalls nicht möglich, da die Innenabmessungen der Baucontainer - wie erwähnt - nicht exakt festgelegt sind, sondern innerhalb einer Bandbreite liegen. Aus optischen Gründen und aus Sicherheitsgründen soll aber der Kabelkanal zum Innenraum des Baucontainers hin vollständig abgeschlossen sein, so dass es für einen Benutzer des Kabelkanals nicht möglich ist, ohne Entfernen des Deckels in das Innere des Kabelkanals hineinzulangen.

Mit der erfindungsgemäß vorgesehenen Abdeckblende kann der Kabelkanal in einfacher Weise an die vorgesehene Wand im Container angepaßt werden. Ein Zwischenraum zwischen dem Grundkörper des Kabelkanals und den jeweiligen seitlichen Begrenzungswänden des Containers wird dann in einfacher Weise durch Verschieben der Abdeckblende überbrückt. Der Kabelkanal ist dadurch zum Innenraum des Containers hin verschlossen und gegen Eingriff gesichert. Der erfindungsgemäße Kabelkanal kann vorkonfektioniert geliefert werden, d.h. mit einer oder zwei Abdeckblenden an seinen Enden und bereits mit fertig verkabelten elektrischen Installationsgeräten, die dann bereits mit einem Schutzkontaktstecker verkabelt sind, so dass die Installationsgeräte im Kabelkanal in äußerst einfacher Weise durch einfaches Einstecken des Schutzkontaktsteckers angeschlossen werden können. Zusätzlich können auch datentechnische Installationsgeräte vorgesehen sein, die dann beispielsweise mit einem Netzwerkkabel anschlussfertig verbunden sind. Nach dem Aufstellen eines Baucontainers muss dann lediglich der Schutzkontaktstecker und gegebenenfalls ein Netzwerkkabel innerhalb oder außerhalb des Containers angeschlossen werden, um den Container betriebsbereit zu machen.

Mittels einer solchen Halteplatte kann die Abdeckblende in sehr einfacher Weise am Grundkörper befestigt werden. Beispielsweise ist die Halteplatte in Langlöchern der Abdeckplatte verschiebbar geführt. Nachdem der Grundkörper des Kabelkanals an der vorgesehenen Wand im Container befestigt ist, wird dann die Abdeckblende in Längsrichtung des Grundkörpers von dem Grundkörper weg verschoben, bis ihr außen liegendes Ende an der Begrenzungswand des Containers anschlägt. In dieser Position wird dann die Halteplatte in den Langlöchern der Abdeckblende so verschoben, dass sie an dem Grundkörper angreift und in dieser Position dann fixiert. Die Abdeckblende kann dadurch sehr schnell und problemlos in der vorgesehenen Position fixiert werden. Zum Abnehmen des Kabelkanals muss dann lediglich die Halteplatte gelöst werden und die Abdeckblende wieder zurück in Richtung auf den Grundkörper geschoben werden. Der Kabelkanal kann dann problemlos wieder abgenommen werden.

Auf diese Weise ist eine besonders einfache und schnelle Befestigung der Abdeckblende möglich. Die Abdeckblende ist hierzu verschiebbar auf dem Grundkörper geführt. Nach Montage des Grundkörpers an der Wand wird dann - wie ausgeführt - die Abdeckblende in Richtung auf die Begrenzungswand des Containers verschoben, bis sie mit einem Ende an dieser Wand anstößt. Die Halteplatte muss dann relativ zur Abdeckblende lediglich so weit verschoben werden, bis sie mit einer Kante stumpf an das seitliche Ende des Kabelkanals anstößt. Die Halteplatte wird dann in dieser Position fixiert und sichert dadurch gleichzeitig die Abdeckblende in ihrer vorgesehenen Endposition.

In Weiterbildung der Erfindung erstreckt sich die Abdeckblende im Bereich des seitlichen Endes des Grundkörpers des Kabelkanals wenigstens entlang einer Vorderseite des Kabelkanals und einer Oberseite des Kabelkanals. Auf diese Weise kann die in der Regel sichtbare Vorderseite und Oberseite des Kabelkanals abgedeckt werden.

In Weiterbildung der Erfindung erstreckt sich die Abdeckblende im Bereich des seitlichen Endes des Grundkörpers des Kabelkanals entlang einer Vorderseite, einer Oberseite, einer Unterseite und wenigstens abschnittsweise entlang einer Rückseite des Kabelkanals.

Auf diese Weise können sämtliche für einen Benutzer zugängliche Seiten des Kabelkanals abgedeckt werden, nämlich die Vorderseite, die Oberseite und die Unterseite. Indem sich die Abdeckblende wenigstens abschnittsweise entlang einer Rückseite des Kabelkanals erstreckt, kann die Abdeckblende sicher und dennoch verschiebbar am Grundkörper befestigt werden. Beispielsweise kann die Abdeckblende auf eine Außenseite des Grundkörpers aufgeschoben werden oder in den Grundkörper eingeschoben werden.

In Weiterbildung der Erfindung umgreift die Abdeckblende den Kabelkanal im Bereich seines seitlichen Endes klammerartig.

Auf diese Weise kann die Abdeckblende in sehr einfacher Weise montiert werden, ist sicher am Grundkörper befestigt und dennoch in Längsrichtung des Grundkörpers verschiebbar und deckt alle für einen Benutzer des Kabelkanals zugänglichen Seiten des Kabelkanals ab.

In Weiterbildung der Erfindung ist eine Haltevorrichtung zur Befestigung des Kabelkanals an einer Wand vorgesehen, wobei die Haltevorrichtung ein Kanalteil aufweist, das an einer der Wand zugewandten Rückseite des Grundkörpers angeordnet ist, und wobei die Haltevorrichtung ein Wandteil aufweist, das an der Wand angeordnet ist, wobei das Kanalteil und das Wandteil mit zueinander passenden Rastvorrichtungen versehen sind, die werkzeuglos ineinander eingerastet werden können.

Mittels einer oder mehrerer solcher Haltevorrichtungen kann der Kabelkanal werkzeuglos an der Wand eines Containers befestigt werden, vorausgesetzt, dass das Wandteil der Haltevorrichtung bereits an der Containerwand befestigt ist. Die Verwendung von Rastvorrichtungen ist dabei möglich, da der Kabelkanal bei der Montage an der Wand noch zu den seitlichen Begrenzungswänden des Containers beabstandet ist, zwischen den seitlichen Enden des Kabelkanals und den Begrenzungswänden also noch ein Abstand vorhanden ist, so dass der Kabelkanal genügend Bewegungsfreiheit hat, um das Kanalteil der Haltevorrichtung in das Wandteil der Haltevorrichtung einzuhängen. Auch ist es dadurch nicht erforderlich, das Wandteil der Haltevorrichtung in einer exakt vorgegebenen Lage zu montieren, da ja die nach dem Einrasten der Haltevorrichtung vorhandenen Abstände zwischen den seitlichen Enden des Kabelkanals und der gegenüberliegenden Begrenzungswand mit den Abdeckblenden verschlossen werden.

In Weiterbildung der Erfindung weisen die Rastvorrichtungen zwei Rasthaken und dazu passenden Anschlagflächen auf, wobei, in Einbaulage des Kabelkanals, der erste Rasthaken und die passende Anschlagfläche horizontal und der zweite Rasthaken und die dazu passende Anschlagfläche vertikal ausgerichtet sind.

Auf diese Weise kann die Haltevorrichtung in besonders einfacher Weise eingerastet werden, indem zunächst der horizontale Rasthaken in die dazu passende Anschlagfläche eingerastet bzw. eingehängt wird. Der gesamte Kabelkanal mit dem Kanalteil der Haltevorrichtung kann dann noch in horizontaler Richtung verschoben werden, bis der zweite Rasthaken in die dazu passende vertikale Anschlagfläche einrastet bzw. eingehängt wird. Ein solcher Rastvorgang der Haltevorrichtung wird dadurch ermöglicht, dass der Kabelkanal bei der Montage seitlich noch Luft bis zu den Begrenzungswänden des Containers hat, wobei diese seitlichen Abstände dann mit den verschiebbaren Abdeckblenden überbrückt werden.

In Weiterbildung der Erfindung ist der horizontal angeordnete erste Rasthaken in Einbaulage des Kabelkanals oberhalb des vertikal angeordneten zweiten Rasthakens angeordnet.

Auf diese Weise kann eine sehr stabile und sichere Befestigung des Kabelkanals mit einem oder mehreren Kanalteilen und einem bzw. mehreren Wandteilen erfolgen.

In Weiterbildung der Erfindung weist das Kanalteil zwei in Richtung der Wand abragende Rasthaken und das Wandteil die beiden dazu passenden Anschlagflächen auf, wobei der erste, obere Rasthaken nach unten und der zweite, untere Rasthaken seitlich geöffnet ist.

Auf diese Weise kann das Kanalteil mit dem oberen Rasthaken zunächst auf die dazu passende Anschlagfläche des Wandteils aufgesetzt werden. Wenn der erste Rasthaken an der Anschlagfläche anliegt, kann das Kanalteil zusammen mit dem Kabelkanal seitlich verschoben werden, bis der zweite, untere Rasthaken die zweite Anschlagfläche am Wandteil umgreift und den Kabelkanal dadurch an der Wand sichert. Gegen seitliches Verschieben und damit Lösen des Kanalteils vom Wandteil werden die Abdeckblenden relativ zum Kabelkanal verschoben, bis sie an den seitlichen Begrenzungswänden anstoßen und dann in dieser Lage fixiert. Der Kabelkanal ist dadurch unverrückbar an der Wand befestigt. Zum Entfernen des Kabelkanals müssen zunächst die Abdeckblenden wieder auf den Grundkörper des Kabelkanals verschoben werden. Dann kann durch eine seitliche Verschiebung des Kabelkanals relativ zum Wandteil der Haltevorrichtung zunächst der zweite Rasthaken gelöst werden. Anschließend kann der Kabelkanal nach oben bewegt werden, um auch den ersten Rasthaken wieder von der zugehörigen Anschlagfläche am Wandteil zu lösen.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen dargestellten und beschriebenen Ausführungsformen lassen sich dabei in beliebiger Weise miteinander kombinieren, ohne den Rahmen der Erfindung zu überschreiten. In den Zeichnungen zeigen:
- Fig. 1: einen erfindungsgemäßen Kabelkanal in einer Ansicht von schräg vorne,
- Fig. 2: eine schematische teilweise Schnittansicht eines Containers mit einem erfindungsgemäßen Kabelkanal,
- Fig. 3: eine abschnittsweise Ansicht des Kabelkanals der Fig. 1 von schräg unten,
- Fig. 4: eine abschnittsweise Ansicht des Kabelkanals der Fig. 1 von schräg hinten,
- Fig. 5: eine auseinandergezogene abschnittsweise Darstellung des Kabelkanals der Fig. 4,
- Fig. 6: eine der Haltevorrichtungen des Kabelkanals der Fig. 1 in einem nicht verbundenen Zustand,
- Fig. 7: die Haltevorrichtung der Fig. 6 in einem ersten, teilweise montierten Zustand,
- Fig. 8: die Haltevorrichtung der Fig. 6 in einem zweiten, teilweise montierten Zustand,
- Fig. 9: die Haltevorrichtung der Fig. 6 im vollständig montierten Zustand,
- Fig. 10: einen weiteren erfindungsgemäßen Kabelkanal in einer Ansicht von schräg oben in einem ersten Aufbauzustand,
- Fig. 11: den Kabelkanal der Fig. 10 in einem zweiten Aufbauzustand,
- Fig. 12: den Kabelkanal der Fig. 10 im vollständig aufgebauten Zustand,
- Fig. 13: den Kabelkanal der Fig. 12 in einer Ansicht von schräg hinten,
- Fig. 14: den Kabelkanal der Fig. 12 in einer Ansicht von schräg unten,
- Fig. 15: einen weiteren erfindungsgemäßen Kabelkanal in einer Ansicht von schräg oben in einem ersten Aufbauzustand,
- Fig. 16: den Kabelkanal der Fig. 15 in einem zweiten Aufbauzustand und
- Fig. 17: den Kabelkanal der Fig. 15 im vollständig aufgebauten Zustand.

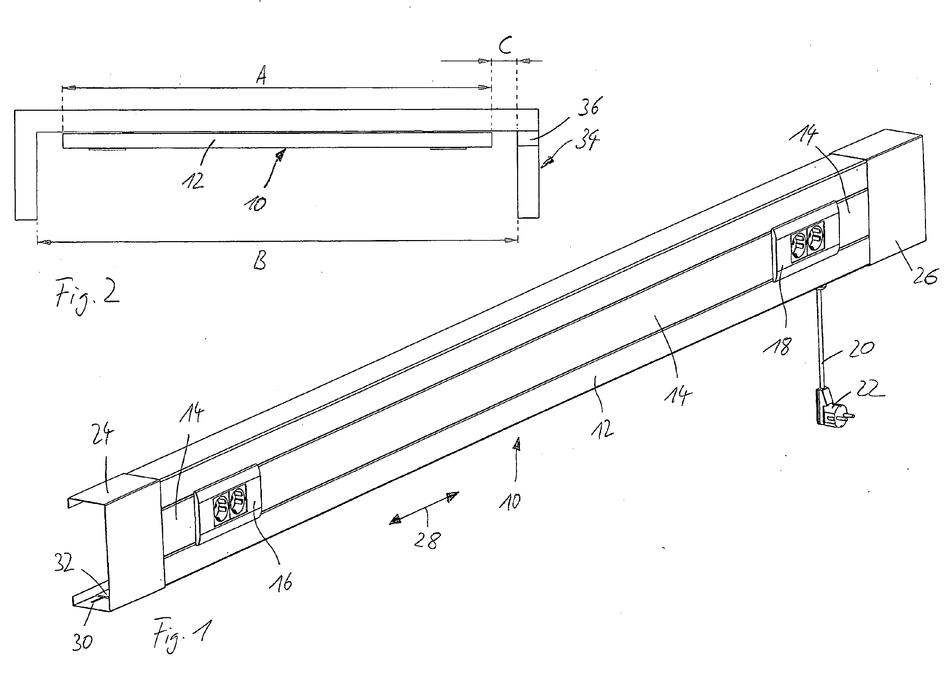

Die Darstellung der Fig. 1 zeigt in einer Ansicht von schräg oben einen erfindungsgemäßen Kabelkanal 10. Der Kabelkanal 10 weist einen rinnenförmigen Grundkörper 12 auf, der eine in Fig. 1 nach vorne hin geöffnete und in Längsrichtung durchgehende Öffnung aufweist, die mittels eines Deckels 14 verschlossen ist. In diese Öffnung des Grundkörpers 12 sind auch zwei elektrische Installationsgeräte 16, 18 eingesetzt, die als handelsübliche Schutzkontaktsteckdosen ausgebildet sind. In nicht sichtbarer Weise sind die Installationsgeräte 16, 18 mit einer Leitung 20 und einem Schutzkontaktstecker 22 verbunden. Um den Kabelkanal 10 in Betrieb zu nehmen, ist es damit lediglich erforderlich, den Schutzkontaktstecker 22 in eine passende und mit elektrischer Energie versorgte Steckdose einzustecken. Selbstverständlich können anstelle der Installationsgeräte 16, 18 auch datentechnische Installationsgeräte, beispielsweise RJ45-Steckdosen, in die Öffnung des Grundkörpers 12 des Kabelkanals 10 eingesetzt werden und mit einem passenden Netzwerkkabel verbunden werden.

Zwischenräume zwischen den Installationsgeräten 16, 18 werden durch den Deckel 14 verschlossen, der nicht nur zwischen den Installationsgeräten 16, 18, sondern auch noch seitlich der Installationsgeräte 16, 18 angeordnet ist. Der Deckel 14 ist dadurch mehrteilig, bei der dargestellten Ausführungsform dreiteilig.

Auf das in Fig. 1 linke und rechte Ende des Grundkörpers 12 des Kabelkanals 10 ist jeweils eine Abdeckblende 24, 26 aufgeschoben. Wie zu erkennen ist, umgreifen die Abdeckblenden 24, 26 das jeweilige Ende des Grundkörpers 12 des Kabelkanals 10 klammerartig. Speziell weisen die Abdeckblenden jeweils im Querschnitt gesehen eine U-Form auf, wobei beide Schenkel der U-Form noch ein Stück weit aufeinander zu abgebogen sind. Dadurch können die Abdeckblenden 24, 26 auf den Grundkörper 12 aufgeschoben werden und sind dann lediglich noch in Längsrichtung des Grundkörpers 12 relativ zu diesem verschiebbar. Eine Längsrichtung ist in der Darstellung der Fig. 1 durch einen Doppelpfeil 28 angedeutet.

Die Abdeckblenden 24 weisen jeweils Langlöcher 30 auf, an denen eine Halteplatte 32 geführt ist. Die Halteplatte 32 dient dazu, die Abdeckblenden 24, 26 in ihrer Endposition am Grundkörper 12 zu fixieren, wobei dies nachfolgend noch erläutert wird.

Die Darstellung der Fig. 2 zeigt eine abschnittsweise Schnittansicht eines Containers 34, wobei der Container 34 lediglich im Bereich eines Endes und mit abgeschnittenem Dach dargestellt ist, um die Einbauverhältnisse für den erfindungsgemäßen Kabelkanal 10 an einer Stirnwand des Containers 34 zu erläutern. Der Kabelkanal 10 ist in Fig. 2 ohne die Abdeckblenden 24, 26 dargestellt. Der Grundkörper 12 weist eine Länge A auf, die üblicherweise zwei Meter beträgt. Eine Breite B zwischen den seitlichen Begrenzungswänden des Containers 34 liegt dahingegen üblicherweise in einem Bereich zwischen 2,18 m bis 2,24 m. Diese Bandbreite ist zum einen durch Toleranzen bei der Herstellung der Container 34 verursacht, zum anderen kann sich der Abstand zwischen den seitlichen Begrenzungswänden aber auch durch Aufbringen unterschiedlicher Wandverkleidungen oder Isolierungen ändern.

Zwischen beiden seitlichen Enden des Grundkörpers 12 des Kabelkanals 10 der jeweiligen seitlichen Begrenzungswand liegt somit ein Abstand C. Dieser Abstand C wird auf beiden Seiten des Grundkörpers 12 mittels der in Fig. 1 dargestellten Abdeckblenden 24, 26 überbrückt. Da die Abdeckblenden 24, 26 relativ zum Grundkörper 12 verschiebbar auf diesem angeordnet sind, kann ein sich zwischen verschiedenen Containern 34 ändernder Abstand C problemlos überbrückt werden. Mittels der Abdeckblenden 24, 26 können dadurch sämtliche von einem Innenraum des Containers 34 zugänglichen offenen Enden des Kabelkanals 10 verschlossen und gegen Eingriff durch einen Bediener gesichert werden.

Der Container 34 weist gegenüberliegend dem in der Fig. 2 rechten seitlichen Ende des Kabelkanals 10 eine Durchgangsöffnung 36 auf. Die Durchgangsöffnung 36 kann beispielsweise für das Durchführen von Energieleitungen oder Datenleitungen zum Kabelkanal 10 benutzt werden.

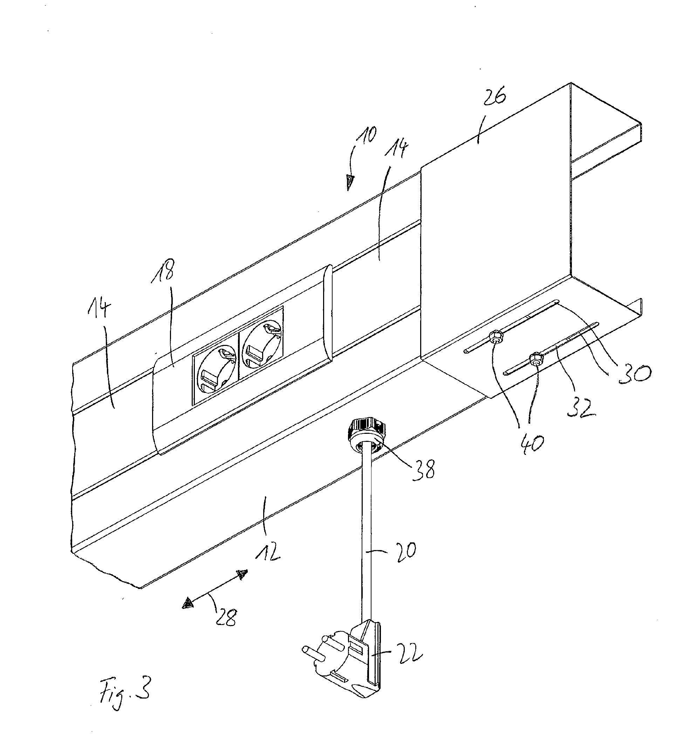

Die Darstellung der Fig. 3 zeigt den Kabelkanal 10 der Fig. 1 in einer abschnittsweisen Ansicht von schräg unten. Die Leitung 20 mit dem Schutzkontaktstecker 22 ist über eine Stopfbuchse 38 in das Innere des Kabelkanals 10 zu dem Installationsgerät 18 geführt. Seitlich des Installationsgeräts 18 sind jeweils Deckel 14 angeordnet, um den Innenraum des Kabelkanals 10 zu verschließen. Auf das in Fig. 3 rechte Ende des Grundkörpers 12 des Kabelkanals 10 ist die Abdeckblende 26 aufgeschoben. Die Abdeckblende 26 umgreift den Grundkörper 12 klammerartig und liegt auf seiner Vorderseite, auf seiner Oberseite, auf seiner Unterseite und abschnittsweise auf seiner Rückseite an. Eine Unterseite der Abdeckblende 26 ist mit zwei parallel zueinander verlaufenden Langlöchern 30 versehen, die parallel zur Längsrichtung 28 des Kabelkanals 10 verlaufen. Diese Langlöcher 30 werden von zwei Schraubbolzen 40 durchsetzt, die an einer Halteplatte 32 befestigt sind, die auf einer Innenseite der Abdeckblende 26 anliegt. Die Halteplatte 32 kann in und entgegen der Längsrichtung 28 relativ zur Abdeckblende 26 verschoben werden und wird dabei mittels der Schraubbolzen 40 an der Abdeckblende 26 gehalten. In einer Endposition, in der die Halteplatte 32 dann an die in Fig. 3 nicht sichtbare Stirnfläche des Grundkörpers 12 des Kabelkanals 10 anschlägt, wird die Halteplatte 32 dann durch Anziehen der Muttern auf den Schraubbolzen 40 gesichert.

Die Halteplatte 32 wird dann in Anschlag an den Grundkörper 12 gebracht, wenn, siehe auch Fig. 2, das in Fig. 3 rechte, freie Ende der Abdeckblende 26 an der seitlichen Begrenzungswand des Containers 34 anstößt. In dieser Position überbrückt die Abdeckblende 26 dann den Abstand C zwischen dem seitlichen Ende des Grundkörpers 12 und der Begrenzungswand des Containers 34. In dieser Position werden dann die Muttern auf den Schraubbolzen 40 angezogen. Da die Halteplatte 32 an der Stirnseite des Grundkörpers 12 anschlägt, kann die Abdeckblende 26 nicht mehr in Richtung auf den Grundkörper 12 zu bewegt werden. Da die Abdeckblende 26 andererseits an der Begrenzungswand des Containers 34 anstößt, ist sie in ihrer Position fixiert und sichert gleichzeitig den Kabelkanal 12 gegen seitliche Verschiebung.

Die in Fig. 1 dargestellte linke Abdeckblende 24 wird in gleicher Weise gegen die Begrenzungswand des Containers 34 verschoben und dann wird die Halteplatte 32 gegen die Stirnfläche des Grundkörpers 12 verschoben und dann mittels der Muttern und den Schraubbolzen 40 in dieser Lage gesichert.

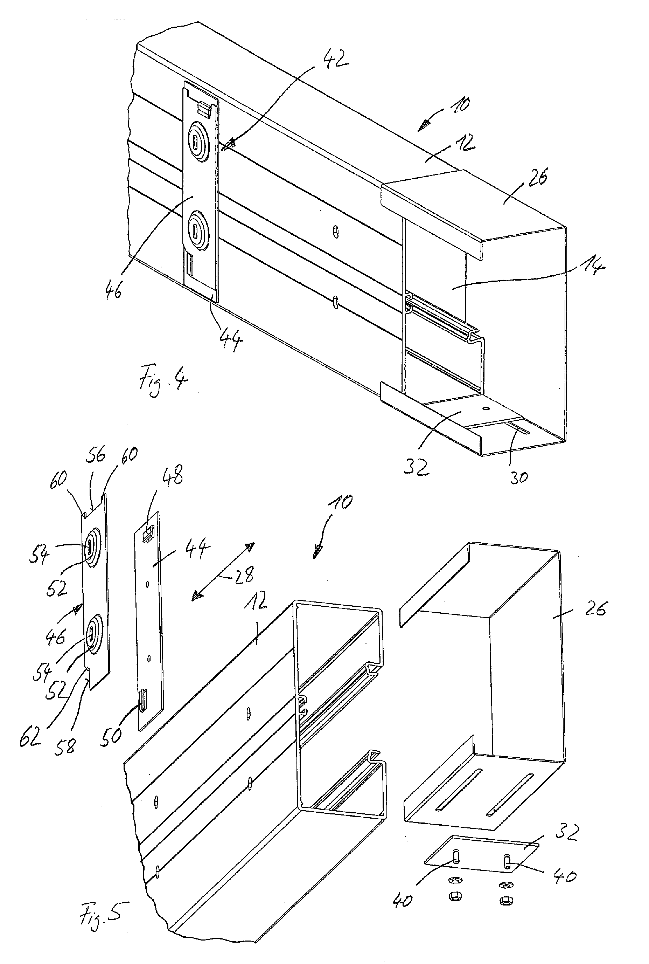

Die Anordnung der Halteplatte 32 in der Abdeckblende 26 ist auch in der Ansicht des Kabelkanals 10 in Fig. 4 zu erkennen. Zu erkennen ist in dieser Ansicht auch wie die Abdeckblende 26 den Grundkörper 12 des Kabelkanals 10 im Bereich seines seitlichen Endes klammerartig umgreift. Mit ihrer Vorderseite, die in Fig. 4 rechts dargestellt ist, liegt die Abdeckblende 26 auch auf dem seitlichen Ende des Deckels 14 auf und überdeckt damit dieses seitliche Ende des Deckels 14 und verhindert, dass ein Benutzer des Kabelkanals 10 in das Innere des Grundkörpers 12 hineinlangen kann.

In der Darstellung der Fig. 4 ist an der Rückseite des Grundkörpers 12 des Kabelkanals 10 noch eine zweiteilige Haltevorrichtung 42 zu erkennen, die aus einem Kanalteil 44 und einem Wandteil 46 besteht. Das Kanalteil 44 und das Wandteil 46 sind jeweils als plattenförmige Blechpressteile bzw. Blechbiegeteile ausgebildet. Das Wandteil 44 wird an einer Rückseite des Grundkörpers 12 des Kabelkanals 10 befestigt und das Wandteil 46 wird mittels Schrauben oder Nägeln an einer in Fig. 2 oben dargestellten Stirnwand des Containers 34 befestigt.

Die Darstellung der Fig. 5 zeigt eine abschnittsweise Explosionsansicht des erfindungsgemäßen Kabelkanals 10, wobei der in Fig. 1 zu erkennende Deckel 14 der Übersichtlichkeit halber weggelassen ist. Das Kanalteil 44 weist die Form einer rechteckigen Platte auf und ist mit einem ersten Rasthaken 48 und einem zweiten Rasthaken 50 versehen. Der erste Rasthaken 48 befindet sich, in Einbaulage des Kabelkanals 10 gesehen, im oberen Bereich des Wandteils 44 und der zweite Rasthaken 50 befindet sich in einem unteren Bereich des Kanalteils 44. Der erste Rasthaken 48 ist parallel zu einer Längsrichtung 28 des Grundkörpers 12 ausgerichtet, in Einbaulage des Kabelkanals 10 also in horizontaler Richtung. Der zweite Rasthaken 50 ist senkrecht zur Längsrichtung 28 ausgerichtet, in Einbaulage des Kabelkanals 10 also in vertikaler Richtung.

Das Wandteil 46 weist zwei Einsenkungen 52 auf, die jeweils mit einem sich in vertikaler Richtung erstreckenden Langloch 54 versehen sind. Durch das Langloch 54 kann eine Schraube oder ein Nagel oder ein sonstiges Befestigungsmittel gesteckt werden, um das Wandteil 46 sicher an einer Wand des Containers zu befestigen.

Das Wandteil 46 ist mit einer ersten Anschlagfläche 56 versehen, die in Einbaulage des Kabelkanals 10 parallel zur Längsrichtung 28 des Grundkörpers 12 des Kabelkanals 10 ausgerichtet ist. Diese Anschlagfläche 56 ist passend zum ersten Rasthaken 48 ausgebildet. Die erste Anschlagfläche 56 ist, in Einbaulage des Kabelkanals 10, an einem oberen Ende des Wandteils 46 angeordnet.

Das Wandteil 46 weist eine zweite Anschlagfläche 58 auf, die senkrecht zur Längsrichtung 28 des Kabelkanals 12 ausgerichtet ist, in Einbaulage des Kabelkanals 10 also in vertikaler Richtung. Die Anschlagfläche 58 ist passend zum zweiten Rasthaken 50 ausgebildet. Die zweite Anschlagfläche 58 befindet sich, in Einbaulage des Kabelkanals 10, an einem unteren Ende des Wandteils 46.

Die erste Anschlagfläche 56 ist seitlich durch zwei Vorsprünge 60 des Wandteils 46 begrenzt. Die Breite der Anschlagfläche 56 ist aber noch größer als die Breite des ersten Rasthakens 48, so dass auch nach dem Einhängen des Rasthakens 48 auf die Anschlagfläche 56 das Kanalteil 44 noch relativ zum Wandteil 46 in und entgegen der Längsrichtung 28 verschoben werden kann. Die zweite Anschlagfläche 58 ist nach oben hin durch einen Absatz 62 begrenzt. Wenn der erste Rasthaken 48 auf die erste Anschlagfläche 56 aufgesetzt ist, fluchtet ein oberes Ende des zweiten Rasthakens 50 etwa mit dem Anschlag 62. Wenn der zweite Rasthaken 50 in die Anschlagfläche 58 eingehängt ist, lässt sich somit das Kanalteil 44 nicht mehr in vertikaler Richtung zum Kanalteil 46 bewegen, da eine Bewegung nach unten durch den ersten Rasthaken 48 und eine Bewegung nach oben durch den Anschlag des zweiten Rasthakens 50 am Absatz 62 blockiert ist.

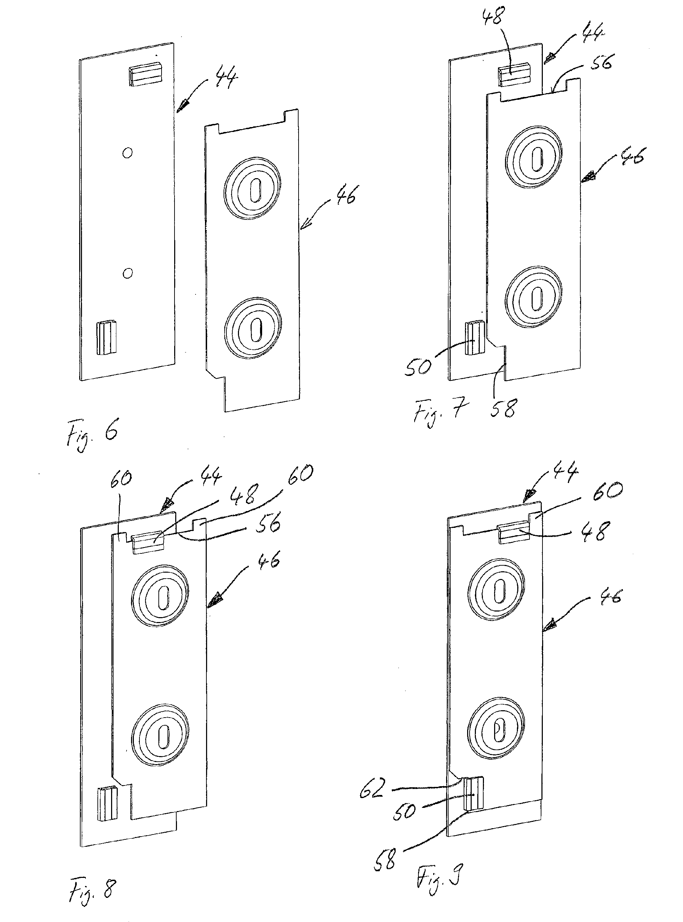

Die Darstellungen der Fig. 6 bis 9 zeigen verschiedene Zustände beim Verrasten der Haltevorrichtung 42. Der Kabelkanal 10 ist, wie in Fig. 2 angedeutet ist, mit zwei Haltevorrichtungen 42 versehen. Die Haltevorrichtungen 42 sind dabei in gleicher Ausrichtung an der Rückseite des Grundkörpers 12 montiert und auch die Wandteile 46 sind jeweils in gleicher Ausrichtung an der Wand des Containers 34 montiert.

In der Darstellung der Fig. 6 sind das Kanalteil 44 und das Wandteil 46 vollständig voneinander getrennt. Das Kanalteil 44 ist an der Rückseite des Grundkörpers 12 des Kabelkanals 10 befestigt, siehe beispielsweise Fig. 4. Der Grundkörper 12 ist dadurch im Zustand der Fig. 6 noch von der Wand des Containers 34 beabstandet.

In der Darstellung der Fig. 7 ist das Kanalteil 44 nun so weit in Richtung auf das Wandteil 46 verschoben worden, dass das Kanalteil 44 und das Wandteil 46 flächig aneinander anliegen. Der erste Rasthaken 48 und der zweite Rasthaken 50 sind aber noch nicht in die jeweiligen Anschlagflächen 56, 58 am Wandteil 56 eingehängt worden. In der in Fig. 7 dargestellten Position ist also noch eine Verschiebung des Kanalteils 44 parallel zum Wandteil 46 möglich. Dies entspricht einer Verschiebung des Grundkörpers 12 des Kabelkanals 10 auf der Wand des Containers 34.

Ausgehend von der in Fig. 7 dargestellten Lage wird das Kanalteil 44 dann nach unten bewegt, bis der erste Rasthaken 48 auf die Anschlagfläche 56 des Wandteils 46 aufgeschoben ist und die Position der Fig. 8 erreicht ist. In dieser Position ist eine weitere Bewegung des Kanalteils 44 nach unten also blockiert. Das Kanalteil 44 kann relativ zum Wandteil 46 nun lediglich noch in horizontaler Richtung, also parallel zur Anschlagfläche 56 verschoben werden. Eine seitliche Bewegung des Kanalteils 44 ist aber durch die seitlichen Vorsprünge 60 am Wandteil 46 begrenzt. Der Grundkörper 12 des Kabelkanals kann somit in der in Fig. 8 dargestellten Lage von Kanalteil 44 und Wandteil 46 lediglich noch um ein kleines Stück nach links und rechts in horizontaler Richtung verschoben werden.

Ausgehend von der Position der Fig. 8 wird das Kanalteil 44 dann nach rechts in die in Fig. 9 dargestellte Position bewegt, in der der erste Rasthaken 48 des Kanalteils 44 an dem in Fig. 9 rechten Vorsprung 60 des Wandteils 46 anschlägt. In dieser Position rastet dann auch der zweite Rasthaken 50 in die Anschlagfläche 58 am Wandteil 46 ein. Eine weitere Bewegung in der Fig. 9 nach rechts ist somit durch den zweiten Rasthaken 50 und die Anschlagfläche 58 blockiert sowie auch durch den ersten Rasthaken 48 und den Vorsprung 60. Eine Bewegung des Wandteils 44 ausgehend von der Position der Fig. 9 nach oben ist durch den Anschlag des zweiten Rasthakens 50 an dem Absatz 62 des Wandteils 46 blockiert. Nach dem Einhängen des Kanalteils 44 in das Wandteil 46 kann der Grundkörper 12 des Kabelkanals 10 somit ausgehend von der in Fig. 9 dargestellten Lage nur noch in horizontaler Richtung, in der Fig. 9 nach links, verschoben werden. Ausgehend von der gemäß Fig. 9 erreichten Stellung von Kanalteil 44 und Wandteil 46 werden dann, siehe Fig. 1, Fig. 3 und Fig. 4, die Abdeckblenden 24, 26 relativ zum Grundkörper 12 jeweils nach außen verschoben, bis sie jeweils an den seitlichen Begrenzungswänden des Containers 34 anstoßen. In dieser Position werden dann, siehe Fig. 3, die Halteplatten 32 gegen die Stirnseiten des Grundkörpers 12 des Kabelkanals 10 geschoben und die Halteplatten 32 werden dann mittels der Muttern auf den Schraubbolzen 40 in dieser Endstellung gesichert. Der Grundkörper 12 des Kabelkanals 10 kann damit weder in horizontaler Richtung noch in vertikaler Richtung relativ zur Wand des Containers 34 verschoben werden und ist dadurch in seiner Montageposition an der Wand des Containers 34 zuverlässig gesichert.

Zum Abnehmen des Kabelkanals 10 müssen lediglich die Muttern auf den Schraubbolzen 40 gelockert werden und die Abdeckblenden 24, 26 wieder in Richtung auf den Grundkörper 12 des Kabelkanals 10 zu verschoben werden, so dass eine Verschiebung in Längsrichtung 28 des Grundkörpers 12 möglich ist, also in horizontaler Richtung. Dann kann das Kanalteil 44, wieder ausgehend von der Position der Fig. 9, über die Position der Fig. 8 und der Fig. 7 bewegt werden, so dass das Kanalteil 44 vom Wandteil 46 freikommt und der Kabelkanal 10 in einfacher Weise abgenommen werden kann.

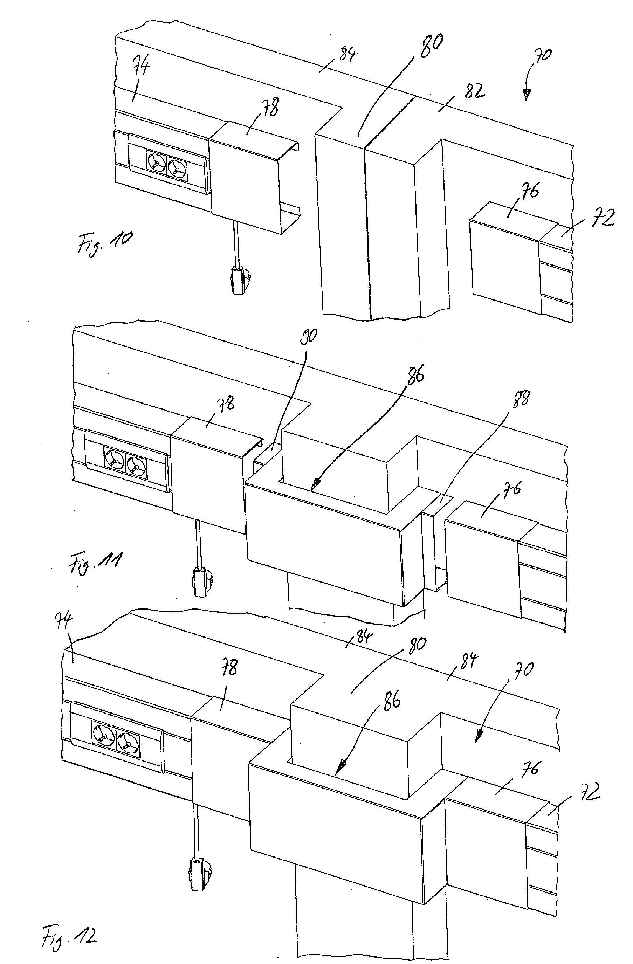

Die Darstellung der Fig. 10 zeigt einen erfindungsgemäßen Kabelkanal 70, der in der Darstellung der Fig. 10 noch nicht fertig gestellt ist und zwei Kabelkanalstücke 72, 74 aufweist, die an ihren jeweiligen Enden jeweils mit einer Abdeckblende 76, 78 versehen sind. Die Abdeckblenden 76, 78 sind identisch ausgebildet wie die Abdeckblenden 24, 26, die in Fig. 1 dargestellt und in diesem Zusammenhang beschrieben wurden.

Der Kabelkanal 70 ist im fertig gestellten Zustand dafür vorgesehen, einen Wandvorsprung 80 zu überbrücken, wobei dieser Wandvorsprung 80 durch die Stoßstelle zwischen zwei Containern 82, 84 gebildet ist. Um den Kabelkanal 70 über diesen Wandvorsprung 80 zu führen, ist ein Formstück 86 vorgesehen, siehe Fig. 11, das an den Wandvorsprung 80 angepasst ist und einen U-förmigen Innenraum zum Durchführen von Kabeln definiert. Das Formstück 86 weist zwei Anschlussabschnitte 88, 90 auf, die an den Querschnitt der Abdeckblenden 76, 78 angepasst sind. Speziell ist ein Außenumfang der Anschlussabschnitte 88 geringfügig kleiner als ein Innenumfang der Abdeckblenden 76, 78, so dass die Abdeckblenden über die Anschlussabschnitte 88, 90 des Formstücks 86 geschoben werden können.

Fig. 12 zeigt den fertig gestellten Zustand des Kabelkanals 70. Die Kabelkanalstücke 72, 74 werden jeweils mittels einer der Abdeckblenden 76, 78 fortgesetzt, die wiederum auf die in Fig. 12 nicht sichtbaren Anschlussabschnitte 88, 90 des Formstücks 86 aufgeschoben sind. Zusammen mit den Abdeckblenden 76, 78 und dem Formstück 86 stellt der Kabelkanal 70 dadurch einen durchgehenden Innenraum zum Einlegen von Kabeln bereit, wobei die Kabel dadurch verdeckt über den Wandvorsprung 80 an der Schnittstelle der beiden Container 82, 84 geführt werden können.

Die Kabel liegen in dem durchgehenden Innenraum des Formstücks verdeckt. Durch die verschiebbaren Abdeckblenden 76, 78 können unterschiedliche Breiten der einzelnen Container 82, 84 problemlos ausgeglichen werden. Das Formstück 86 kann alleine durch die beiden Abdeckblenden 76, 78 sicher gehalten werden, so dass keine separate Befestigung des Formstücks 86 erforderlich ist.

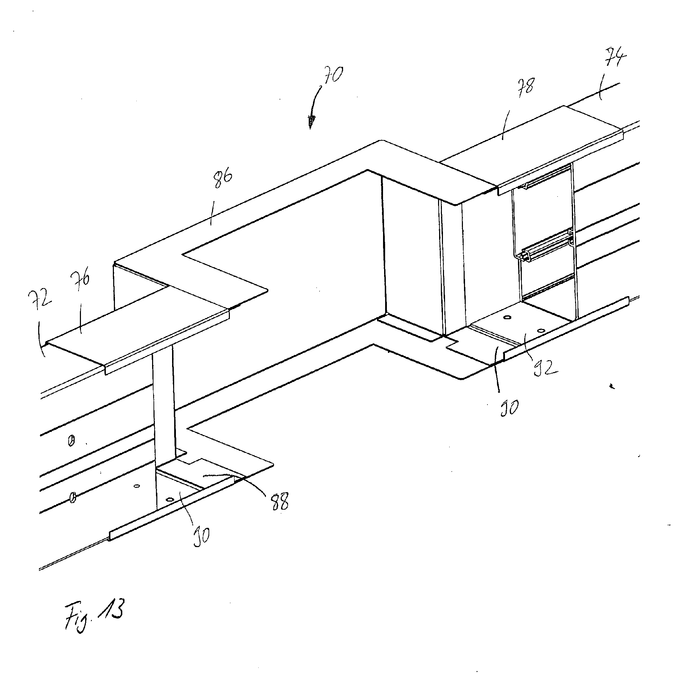

Die Darstellung der Fig. 13 zeigt den Kabelkanal 70 in einer Ansicht von schräg hinten, wobei die Container 82, 84 der Übersichtlichkeit halber nicht dargestellt sind.

Jede der Abdeckblenden 76, 78 ist mit einer verschiebbaren Halteplatte 90 bzw. 92 versehen, wobei die Halteplatten 90, 92 und die Abdeckblenden 76, 78 identisch zu den Halteplatten 32 bzw. den Abdeckblenden 24, 26, siehe Fig. 1, ausgebildet sind. Im dargestellten montierten Zustand des Kabelkanals 70 stützen sich die Halteplatten 90, 92 somit jeweils an der Stirnseite des zugeordneten Kabelkanals 72, 74 ab und drücken die Abdeckblenden 76, 78 dadurch in eine Richtung aufeinander zu, also in Richtung auf das Formstück 86.

Wie in Fig. 13 zu erkennen ist, sind die Abdeckblenden 76, 78 jeweils auf die Anschlussabschnitte 88, 90 des Formstücks 86 aufgeschoben. Das Formstück 86 ist bei der dargestellten Ausführungsform als Blechbiegeteil ausgebildet, und in dem in Fig. 13 unten liegenden Bereich der Anschlussabschnitte 88, 90 ist das Blechmaterial des Formstücks 86 um 180° umgebogen und weist dadurch in diesem Bereich die doppelte Materialstärke auf. Da die beiden Abdeckblenden 76, 78 in Richtung auf das Formstück 86 gedrückt werden, wird dieses sicher zwischen den beiden Abdeckblenden 76, 78 gehalten.

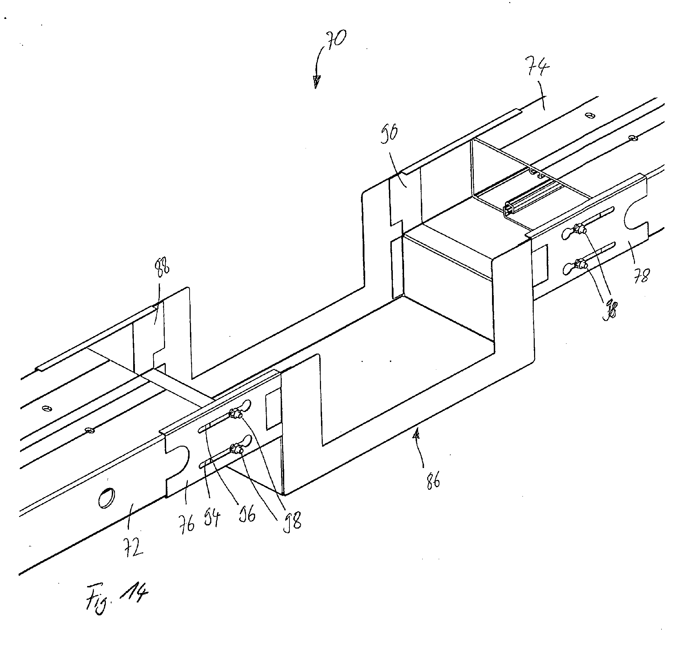

Die Darstellung der Fig. 14 zeigt den Kabelkanal 70 der Fig. 13 in einer Ansicht von schräg unten, wobei wie in der Fig. 13 die Container 82, 84 der Übersichtlichkeit halber weggelassen sind. Zu erkennen ist, dass jede der Abdeckblenden 76, 78 an ihrem, im Einbauzustand der Fig. 12 unten liegenden Schenkel mit jeweils zwei Langlöchern 94, 96 versehen ist, die parallel zueinander angeordnet sind und parallel zu einer Längsrichtung der Kabelkanalstücke 72, 74 liegen. Die jeweiligen Halteplatten der Abdeckblenden 76, 78 sind jeweils mit zwei Gewindebolzen 98 versehen, die sich durch die Langlöcher 94, 96 hindurch erstrecken. Auf die Gewindebolzen 98 sind Muttern aufgeschraubt. Durch Anziehen der Muttern kann dadurch die jeweilige Halteplatte in ihrer Position relativ zu der jeweiligen Abdeckblende 76, 78 fixiert werden. Zur Montage des Kabelkanals 70 wird somit die Abdeckblende 76 in der Darstellung der Fig. 14 nach rechts oben in Richtung auf das Formstück 86 geschoben und die Abdeckblende 78 wird in der Darstellung der Fig. 14 nach links unten ebenfalls in Richtung auf das Formstück 86 geschoben. In der Endposition der Abdeckblenden 76, 78, wenn diese also auf den jeweiligen Anschlussabschnitten 88, 90 des Formstücks 86 aufsitzen, werden dann die jeweiligen Halteplatten in Richtung auf das angrenzende Kabelkanalstück 72, 74 geschoben. Sobald die Halteplatten mit einer Seitenkante an der Stirnseite der Kabelkanalstücke 72, 74 anliegen, werden die Muttern auf den Schraubbolzen 98 angezogen, um die Halteplatten und damit auch die Abdeckblenden 76, 78 in ihrer dann erreichten Position zu fixieren.

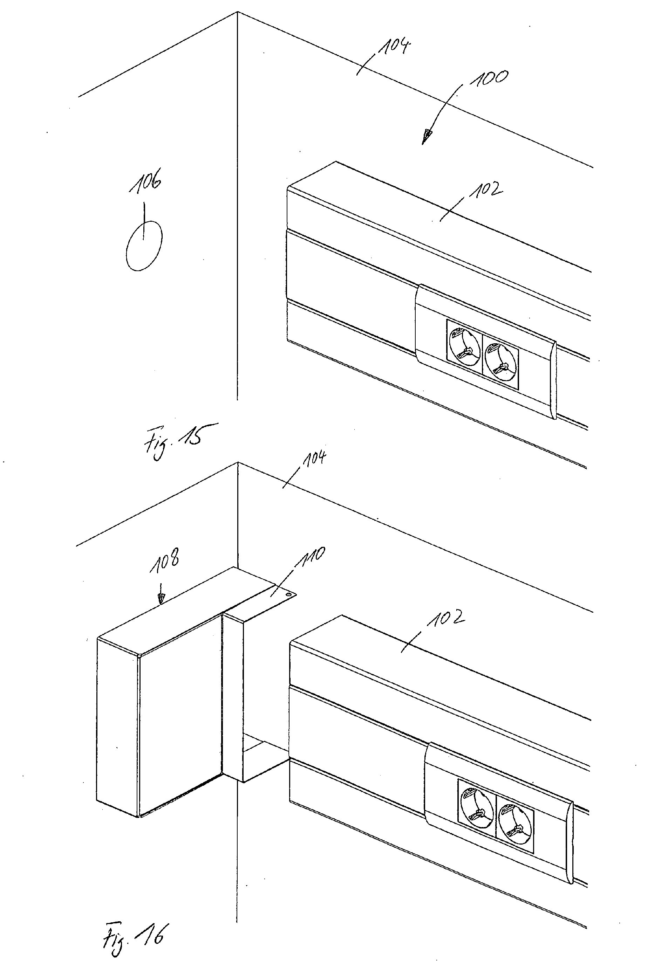

Die Darstellung der Fig. 15 zeigt einen weiteren erfindungsgemäßen Kabelkanal 100 in einem ersten Aufbauzustand, in dem zunächst lediglich ein Kabelkanalstück 102 an der Stirnwand eines Containers 104 befestigt worden ist, wie dies bereits anhand des Kabelkanals 10 und der Fig. 4 bis 9 beschrieben wurde. Der Container 104 weist in einer Seitenwand eine Durchgangsöffnung 106 auf, die zum Einführen von Datenleitungen in den Container 104 dient. Die Position dieser Durchgangsöffnung 106 liegt etwa 170 mm von der Stirnseite des Containers 104, an der das Kabelkanalstück 102 befestigt ist, entfernt und würde somit durch den Kabelkanal 102, auch wenn dieser bis zu der Seitenwand verlängert würde, nicht abgedeckt werden. Die Position der Durchgangsöffnung 106 liegt üblicherweise in der beschriebenen Entfernung und ist im Rahmen üblicher Toleranzen zwischen den derzeit verwendeten Containern einheitlich.

Um die durch die Durchgangsöffnung 106 eingeführten Datenleitungen abdecken zu können, ist, siehe Fig. 16, ein Formstück 108 vorgesehen, das eine L-artige Form hat und einen Anschlussabschnitt 110 aufweist. Der Anschlussabschnitt 110 weist einen U-artigen Querschnitt auf und wird fluchtend zu dem Kabelkanalstück 102 angeordnet. Das Formstück 108 definiert einen zu der Seitenwand des Containers 104 und damit zu der Durchgangsöffnung 106 hin offenen Innenraum.

Um das Formstück 108 festzuhalten, wird eine Abdeckblende 112 auf das freie Ende des Kabelkanalstücks 102 aufgeschoben. Die Abdeckblende 112 ist identisch zu den bereits erläuterten Abdeckblenden 24, 26 der Fig. 1 ausgebildet, weist ebenfalls eine verschiebbare Halteplatte auf und wird daher nicht erneut erläutert.

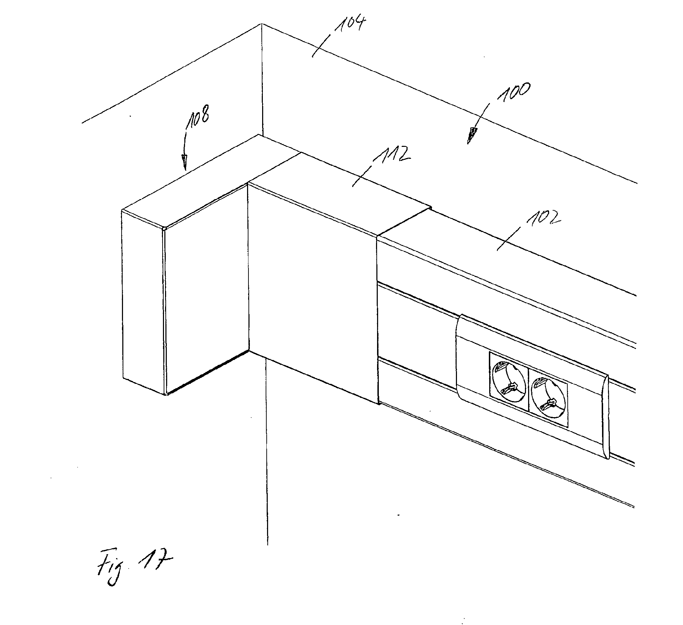

Um den Kabelkanal 100 vollständig zu montieren, wird die Abdeckblende 112 in Richtung auf das Formstück 108 verschoben, bis die Abdeckblende 112 mit ihrem vom Kabelkanalstück 102 abgewandten Ende auf den Anschlussabschnitt 110, siehe Fig. 16, des Formstücks 108 aufgeschoben ist. In dieser Position drückt dann die Abdeckblende 112 das Formstück 108 gegen die Seitenwand des Containers 104, in der die Durchgangsöffnung 106, siehe Fig. 15, angeordnet ist. In dieser in Fig. 17 dargestellten Position wird die Abdeckblende 112 dann mittels der Halteplatte, die gegen die Stirnseite des Kabelkanalstücks 102 geschoben und dieser Lage fixiert wird, gehalten. Das Formstück 108 wird dadurch alleine mittels der Abdeckblende 112 in der in Fig. 17 dargestellten Position gehalten und muss nicht separat befestigt werden. Ein Ausgleich von Toleranzen hinsichtlich der Breite der Stirnwand des Containers 104 wird dabei durch die Verschiebbarkeit der Abdeckblende 112 in und entgegen der Längsrichtung des Kabelkanalstücks 102 ausgeglichen.

## Patentansprüche

1. Kabelkanal mit einem Grundkörper (12) zur Aufnahme von Kabeln und elektrischen und/oder datentechnischen Installationsgeräten (16, 18) mit einem Deckel (14) zum wenigstens abschnittsweisen Verschließen des Kabelkanals (10; 72, 74; 102) und mit wenigstens einer Abdeckblende (24, 26; 76, 78; 112), wobei die Abdeckblende (24, 26; 76, 78; 112) verschiebbar an einem seitlichen Ende des Grundkörpers (12) angeordnet ist, seitlich über das Ende des Grundkörpers (12) hinausragt und relativ zum Grundkörper (12) in und entgegen einer Längsrichtung des Kabelkanals (10) verschiebbar ist, wobei die Abdeckblende (24, 26) mit wenigstens einer Halteplatte (32; 92), die im montierten Zustand der Abdeckblende (24, 26) am Kabelkanal (10) angreift, versehen ist, **dadurch gekennzeichnet, dass** die Halteplatte (32; 92) relativ zur Abdeckblende (24, 26; 76, 78; 112) verschiebbar angeordnet ist und dass die Halteplatte (32; 92) im montierten Zustand der Abdeckblende (24, 26; 76, 78; 112) an dem seitlichen Ende des Kabelkanals (10; 72, 74; 102) anstößt.

2. Kabelkanal nach Anspruch 1, **dadurch gekennzeichnet, dass** die Abdeckblende (24, 26; 76, 78; 112) sich im Bereich des seitlichen Endes wenigstens entlang einer Vorderseite des Kabelkanals (10; 72, 74; 102) und einer Oberseite des Kabelkanals (10; 72, 74; 102) erstreckt.

3. Kabelkanal nach Anspruch 2, **dadurch gekennzeichnet, dass** die Abdeckblende (24, 26; 76, 78; 112) sich im Bereich des seitlichen Endes entlang einer Vorderseite, einer Oberseite, einer Unterseite und wenigstens abschnittsweise entlang einer Rückseite des Kabelkanals (10; 72, 74; 102) erstreckt.

4. Kabelkanal nach Anspruch 2 oder 3, **dadurch gekennzeichnet, dass** die Abdeckblende (24, 26; 76, 78; 112) den Kabelkanal (10; 72, 74; 102) im Bereich seines seitlichen Endes klammerartig umgreift.

5. Kabelkanal nach einem der vorstehenden Ansprüche, **dadurch gekennzeichnet, dass** eine Haltevorrichtung (42) zur Befestigung des Kabelkanals (10) an einer Wand vorgesehen ist, wobei die Haltevorrichtung (42) ein an einer der Wand zugewandten Rückseite des Grundkörpers (12) angeordnetes Kanalteil (44) und ein an der Wand angeordnetes Wandteil (46) aufweist und wobei das Kanalteil (44) und das Wandteil (46) mit zueinander passenden Rastvorrichtungen versehen sind, die werkzeuglos ineinander eingerastet werden können.

6. Kabelkanal nach Anspruch 5, **dadurch gekennzeichnet, dass** die Rastvorrichtungen zwei Rasthaken (48, 50) und dazu passende Anschlagflächen (56, 58) aufweisen, wobei, in Einbaulage des Kabelkanals (10), der erste Rasthaken (48) und die passende Anschlagfläche (56) horizontal und der zweite Rasthaken (50) und die dazu passende Anschlagfläche (58) vertikal ausgerichtet sind.

7. Kabelkanal nach Anspruch 6, **dadurch gekennzeichnet, dass** der horizontal angeordnete erste Rasthaken (48) in Einbaulage des Kabelkanals (10) oberhalb des vertikal angeordneten zweiten Rasthakens (50) angeordnet ist.

8. Kabelkanal nach Anspruch 6 oder 7, **dadurch gekennzeichnet, dass** das Kanalteil (44) zwei in Richtung der Wand abragende Rasthaken (48, 50) und das Wandteil (46) die beiden dazu passenden Anschlagflächen (56, 58) aufweist, wobei der erste, obere Rasthaken (48) nach unten und der zweite, untere Rasthaken (50) seitlich geöffnet ist.

9. Kabelkanal nach wenigstens einem der vorstehenden Ansprüche, **gekennzeichnet durch** wenigstens ein Formstück (86) zum Überbrücken eines Wandvorsprungs oder zum Abdecken einer Wandecke, wobei das Formstück (86) einen Innenraum zum Anordnen von Kabeln definiert und wobei das Formstück wenigstens einen Anschlussabschnitt (88, 90) aufweist, wobei die Abdeckblende (76, 78) abschnittsweise auf den Anschlussabschnitt (88, 90) aufschiebbar ist.

10. Kabelkanal nach Anspruch 9, **dadurch gekennzeichnet, dass** das Formstück (86) wenigstens zwei Anschlussabschnitte (88, 90) aufweist.

11. Kabelkanal nach Anspruch 9 oder 10, **dadurch gekennzeichnet, dass** das Formstück (86) einen U-förmigen Innenraum zur Aufnahme von Kabeln definiert.

12. Kabelkanal nach einem der Ansprüche 9 bis 11, **dadurch gekennzeichnet, dass** der Anschlussabschnitt (88, 90) mit einem Anschlag für die Abdeckblende (76, 78) versehen ist.

## Claims

1. A cable channel having a base body (12) for accommodation of cables and electric and/or data technical installation apparatus (16, 18) having a cover (14) for closing the cable channel (10; 72, 74; 102) at least in sections and having at least one covering panel (24, 26; 76, 78; 112), wherein the covering panel (24, 26; 76, 78; 112) is arranged displaceably on a lateral end of the base body (12), protrudes laterally over the end of the base body (12) and is displaceable relative to the base body (12) in the and counter to a longitudinal direction of the cable channel (10), wherein the covering panel (24, 26) is provided with at least one retaining plate (32; 92) which in the mounted condition of the covering panel (24, 26) engages on the cable channel (10), **characterized in that** the retaining plate (32; 92) is arranged displaceably relative to the covering panel (24, 26; 76, 78; 112) and **in that** the retaining plate (32; 92) in the mounted condition of the covering panel (24, 26; 76, 78; 112) abuts the lateral end of the cable channel (10; 72, 74; 102).

2. The cable channel according to claim 1, **characterized in that** the covering panel (24, 26; 76, 78; 112) extends in the vicinity of the lateral end at least along a front side of the cable channel (10; 72, 74; 102) and an upper side of the cable channel (10; 72, 74; 102).

3. The cable channel according to claim 2, **characterized in that** the covering panel (24, 26; 76, 78; 112) extends in the vicinity of the lateral end along a front side, an upper side, a bottom side and at least in sections along a rear side of the cable channel (10; 72, 74; 102).

4. The cable channel according to claim 2 or 3, **characterized in that** the covering panel (24, 26; 76, 78; 112) encompasses the cable channel (10; 72, 74; 102) in the vicinity of the lateral end thereof in a clamp-like manner.

5. The cable channel according to any one of the preceding claims, **characterized in that** a retaining device (42) for attaching the cable channel (10) to a wall is provided, wherein the retaining device (42) includes a channel part (44) disposed on a rear side of the base body (12) facing the wall and a wall part (46) disposed on the wall, and wherein the channel part (44) and the wall part (46) are provided with matching locking devices which can be locked into each other without a tool.

6. The cable channel according to claim 5, **characterized in that** the locking devices include two latching hooks (48, 50) and matching abutment surfaces (56, 58), wherein, in the installation position of the cable channel (10), the first latching hook (48) and the matching abutment surface (56) are oriented horizontally and the second latching hook (50) and the thereto matching abutment surface (58) are oriented vertically.

7. The cable channel according to claim 6, **characterized in that** the horizontally oriented first latching hook (48) in the installation position of the cable channel (10) is disposed above the vertically oriented second latching hook (50).

8. The cable channel according to claim 6 or 7, **characterized in that** the channel part (44) includes two latching hooks (48, 50) projecting in the direction towards the wall and the wall part (46) includes the two abutment surfaces (56, 58) matching thereto, wherein the first, upper latching hook (48) is opened downwards and the second, lower latching hook (50) is opened laterally.

9. The cable channel according to at least one of the preceding claims, **characterized by** at least one formed part (86) for bridging a wall projection or for covering a wall corner, wherein the formed part (86) defines an interior space for arranging cables, and wherein the formed part includes at least one connecting section (88, 90), wherein the covering panel (76, 78) is capable of being slid sectionally onto the connecting section (88, 90).

10. The cable channel according to claim 9, **characterized in that** the formed part (86) includes at least two connecting sections (88, 90).

11. The cable channel according to claim 9 or 10, **characterized in that** the formed part (86) defines a U-shaped interior space for accommodation of cables.

12. The cable channel according to any one of the claims 9 to 11, **characterized in that** the connecting section (88, 90) is provided with an abutment stop for the covering panel (76, 78).

## Revendications

1. Conduit de câble comprenant un corps de base (12) pour recevoir des câbles et des appareils d'installations électriques et/ou de techniques de données (16, 18) avec un couvercle (14) pour fermer au moins en partie le conduit de câble (10 ; 72, 74 ; 102) et avec au moins un bandeau de recouvrement (24, 26 ; 76, 78 ; 112), le bandeau de recouvrement (24, 26 ; 76, 78 ; 112) étant disposé de manière déplaçable à une extrémité latérale du corps de base (12), faisant saillie latéralement au-delà de l'extrémité du corps de base (12) et pouvant être déplacé par rapport au corps de base (12) dans une direction longitudinale et dans le sens opposé à une direction longitudinale du conduit de câble (10), le bandeau de recouvrement (24, 26) étant pourvu d'au moins une plaque de fixation (32 ; 92) qui, dans l'état monté du bandeau de recouvrement (24, 26), vient en prise avec le conduit de câble (10), **caractérisé en ce que** la plaque de fixation (32 ; 92) est disposée de manière déplaçable par rapport au bandeau de recouvrement (24, 26 ; 76, 78 ; 112) et **en ce que** la plaque de fixation (32 ; 92), dans l'état monté du bandeau de recouvrement (24, 26 ; 76, 78 ; 112), vient en butée contre l'extrémité latérale du conduit de câble (10 ; 72, 74 ; 102).

2. Conduit de câble selon la revendication 1, **caractérisé en ce que** le bandeau de recouvrement (24, 26 ; 76, 78 ; 112) s'étend dans la région de l'extrémité latérale au moins le long d'un côté avant du conduit de câble (10 ; 72, 74 ; 102) et d'un côté supérieur du conduit de câble (10 ; 72, 74 ; 102).

3. Conduit de câble selon la revendication 2, **caractérisé en ce que** le bandeau de recouvrement (24, 26 ; 76, 78 ; 112) s'étend dans la région de l'extrémité latérale le long d'un côté avant, d'un côté supérieur, d'un côté inférieur et au moins en partie le long d'un côté arrière du conduit de câble (10 ; 72, 74 ; 102).

4. Conduit de câble selon la revendication 2 ou 3, **caractérisé en ce que** le bandeau de recouvrement (24, 26 ; 76, 78 ; 112) vient en prise à la manière d'une pince autour du conduit de câble (10 ; 72, 74 ; 102) dans la région de son extrémité latérale.

5. Conduit de câble selon l'une quelconque des revendications précédentes, **caractérisé en ce qu'**un dispositif de retenue (42) est prévu pour la fixation du conduit de câble (10) à une paroi, le dispositif de fixation (42) présentant une partie de conduit (44) disposée au niveau d'un côté arrière du corps de base (12) tourné vers la paroi et une partie de paroi (46) disposée au niveau de la paroi et la partie de conduit (44) et la partie de paroi (46) étant pourvues de dispositifs d'encliquetage adaptés l'un à l'autre qui peuvent être encliquetés l'un dans l'autre sans outil.

6. Conduit de câble selon la revendication 5, **caractérisé en ce que** les dispositifs d'encliquetage présentent deux crochets d'encliquetage (48, 50) et des surfaces de butée (56, 58) adaptées à ceux-ci, le premier crochet d'encliquetage (48) et la surface de butée adaptée (56), dans la position d'installation du conduit de câble (10), étant orientés horizontalement et le deuxième crochet d'encliquetage (50) et la surface de butée adaptée à celui-ci (58) étant orientés verticalement.

7. Conduit de câble selon la revendication 6, **caractérisé en ce que** le premier crochet d'encliquetage (48) disposé horizontalement est disposé dans la position d'installation du conduit de câble (10) au-dessus du deuxième crochet d'encliquetage (50) disposé verticalement.

8. Conduit de câble selon la revendication 6 ou 7, **caractérisé en ce que** la partie de conduit (44) présente deux crochets d'encliquetage (48, 50) faisant saillie dans la direction de la paroi et la partie de paroi (46) présente les deux surfaces de butée (56, 58) adaptées à ceux-ci, le premier crochet d'encliquetage supérieur (48) étant ouvert vers le bas et le deuxième crochet d'encliquetage inférieur (50) étant ouvert latéralement.

9. Conduit de câble selon au moins l'une quelconque des revendications précédentes, **caractérisé par** au moins une pièce formée (86) pour surmonter une saillie de paroi ou pour recouvrir un coin de paroi, la pièce formée (86) définissant un espace interne pour disposer des câbles et la pièce formée présentant au moins une portion de raccordement (88, 90), le bandeau de recouvrement (76, 78) pouvant être poussé en partie sur la portion de raccordement (88, 90).

10. Conduit de câble selon la revendication 9, **caractérisé en ce que** la pièce formée (86) présente au moins deux portions de raccordement (88, 90).

11. Conduit de câble selon la revendication 9 ou 10, **caractérisé en ce que** la pièce formée (86) définit un espace interne en forme de U pour recevoir des câbles.

12. Conduit de câble selon l'une quelconque des revendications 9 à 11, **caractérisé en ce que** la portion de raccordement (88, 90) est pourvue d'une butée pour le bandeau de recouvrement (76, 78).
